# EUROPEAN PATENT APPLICATION

(11) **EP 1 022 388 A1**
(43) Date of publication of application: **26.07.2000**
(21) Application number: 00200202.0
(22) Date of filing: 19.01.2000
(51) Int. Cl.: E01C 9/00

(54) **Sheet-like construction element**

(30) Priority: 20.01.1999 NL 1011093
(71) Applicant: Sell Kunststoffen BV, 3861 RD Nijkerk (NL)
(72) Inventor: Dullemond, Willem, 3862 ZR Nijkerk (NL)
(74) Representative: Voncken, Bartholomeus Maria Christiaan

(57) **Abstract**

A sheet-like construction element (1) for paving surfaces and receiving a filler, such as gravel, earth, grass and the like, comprises a structure of interconnected cells (2,3) spread over the main surface of the element (1). These cells (2,3) are bounded in the plane of the element by upright walls (4), and they are open clear through in a direction perpendicularly to the main surface of the element (1). The walls (4) of at least part of the cells extend at an angle to the surface of the element.

## Description

The invention relates to a sheet-like construction element for paving surfaces and receiving a filler, such as gravel, earth, grass and the like, comprising a structure of interconnected cells spread over the main surface of the element, which cells are bounded in the plane of the element by upright walls and which are open clear through in a direction perpendicularly to the main surface of the element.

In a prior art version of such a construction element, which can for example be used for car parks, public event and recreation parks, bank and shore revetment and the like, the construction element comprises a flat, apertured bottom, on which honeycomb-like cells are formed, which are capable of accommodating the filling material. Pins are formed on the side of the bottom remote from the honeycomb cells, which pins function to secure the sheet-like construction elements to the underlying surface.

The object of the invention is to further improve the sheet-like construction element of the aforesaid kind.

In order to accomplish that objective, the sheet-like construction element is according to the invention characterized in that the walls of at least part of the cells extend at an angle to the surface of the element.

As a result of the oblique position of the walls a more rigid an stable unit is formed, wherein especially the resistance against forces in obliquely downward direction, which for example occur upon acceleration and deceleration of a vehicle, is increased.

Preferably, the element is made up of first and second cells, which alternately taper off from one flat side of the element and from the other flat side of the element.

This construction has several advantages. In the first place, the conical cells have the advantage that it is possible to use easily cleared cores in the production process, which makes it possible to realise a reduced production time. On the other hand, the cells which taper off from the bottom side of the construction element provide additional resistance against the element bogging down in the underlying surface, since the soil thereof will be stopped due to the conical shape of the cells.

In this embodiment it is advantageous when the side of the element that is intended to be the bottom side is open and the bottoms of the first cells tapering off from the upper side extend beyond the walls of the second cells in a direction perpendicularly to the main surface of the element. In this way the lower parts of the first cells function to secure the element in position in lateral direction, so that no additional securing means, such as pins, are required.

An additional advantage of the oblique walls of the cells is the fact that the cells can be formed such that when the elements are stacked together, the cells positioned one above another will overlap in vertical direction, so that the elements can be nested and a saving on transport and storage costs can be realised, therefore.

The invention will now be explained in more detail with reference to the drawings, which show an exemplary embodiment of the sheet-like construction element according to the invention.

Figure 1 is a top plan view of three adjoining sheet-like construction elements of the embodiment according to the invention.

Figure 2 is a larger-scale sectional view along line II-II in Figure 1.

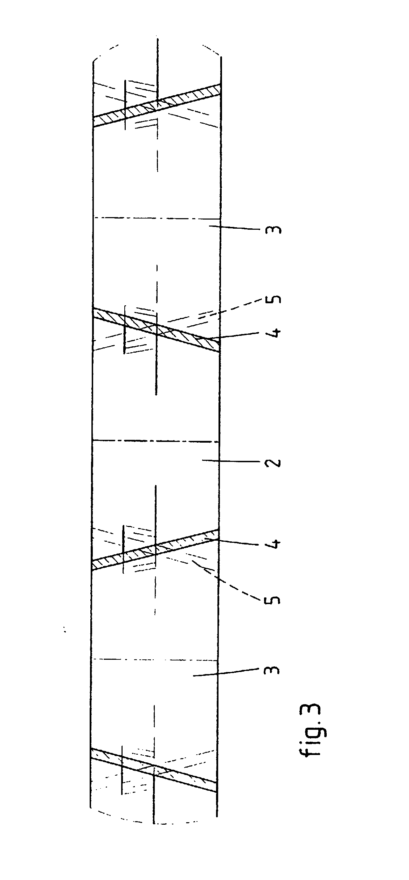

Figure 3 is an even larger-scale sectional view along line III-III in Figure 1.

Figure 4 is a partial side view of a number of stacked-together, nested construction elements as shown in Figure 1.

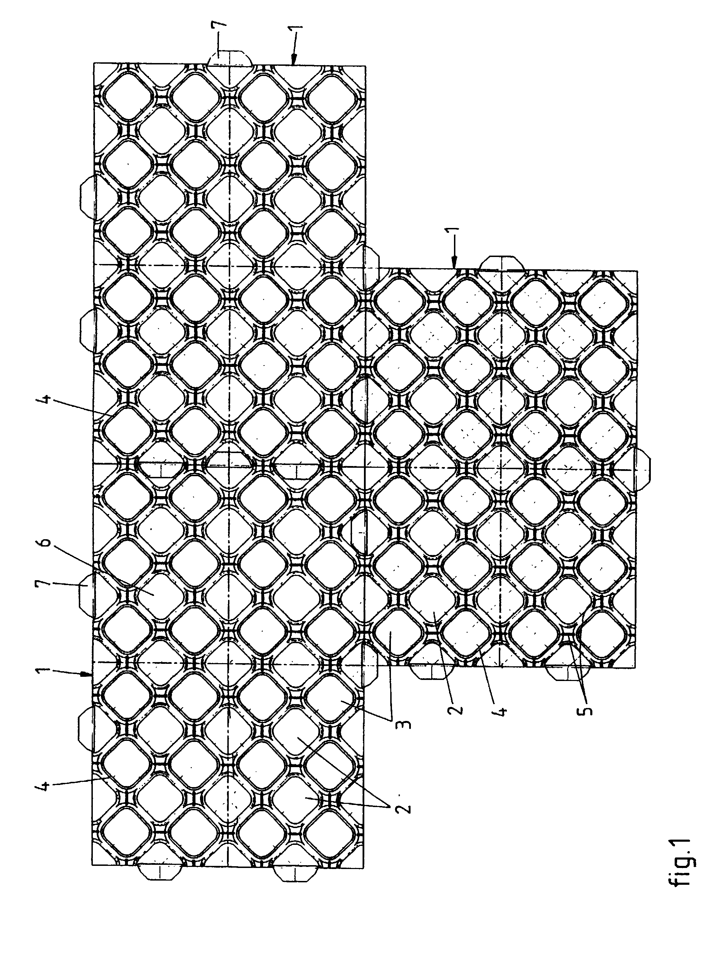

The drawing, and to begin with Figure 1, shows a sheet-like construction element1 for paving surfaces, so that said surface will have a larger load-carrying capacity after provision of the construction elements. Furthermore this construction element is intended to be filled and/or covered with a natural material, so that a surface which is capable of carrying a load and which looks natural is obtained. The construction element can be used for forming grass surfaces capable of carrying a load, such as car parks, grass roads and the like. The construction elements can furthermore be used for strengthening verges, banks and on slopes to prevent erosion. Also other uses are conceivable.

As can be seen in the drawing, a sheet-like construction element 1 comprises a structure of interconnected cells spread over the main surface of the element 1. In this embodiment, the cells consist of first cells 2 and second cells 3 differing therefrom, which cells are arranged in alternating rows, wherein the rows extend at an angle of 45 degrees to the main directions of element 1 in this embodiment.

Cells 2 and 3 are open clear through in a direction perpendicularly to the main surface of element 1, so that oxygen, water, fertilizers and the like can permeate into the ground through the element without impediment. Cells 2 and 3 are laterally bounded by upright walls 4, which do not extend perpendicularly to the surface of element 1 but which extend slightly obliquely with respect to the perpendicular, preferably at an angle of less than 25 , for example 15 . As a result of this position of sloping walls 4, cells 2 and 3 are formed, such that the first cells 2 taper off from the upper side, whilst the second cells 3 taper off from the bottom side of element 1. Thus a more stable element is obtained, which provides substantial resistance against obliquely downward forces.

As can be seen in the figures, the second cells 3 are actually spaced apart, and they are interconnected by partitioning walls 5, which are single walls in an upper part and compound walls in a lower part.

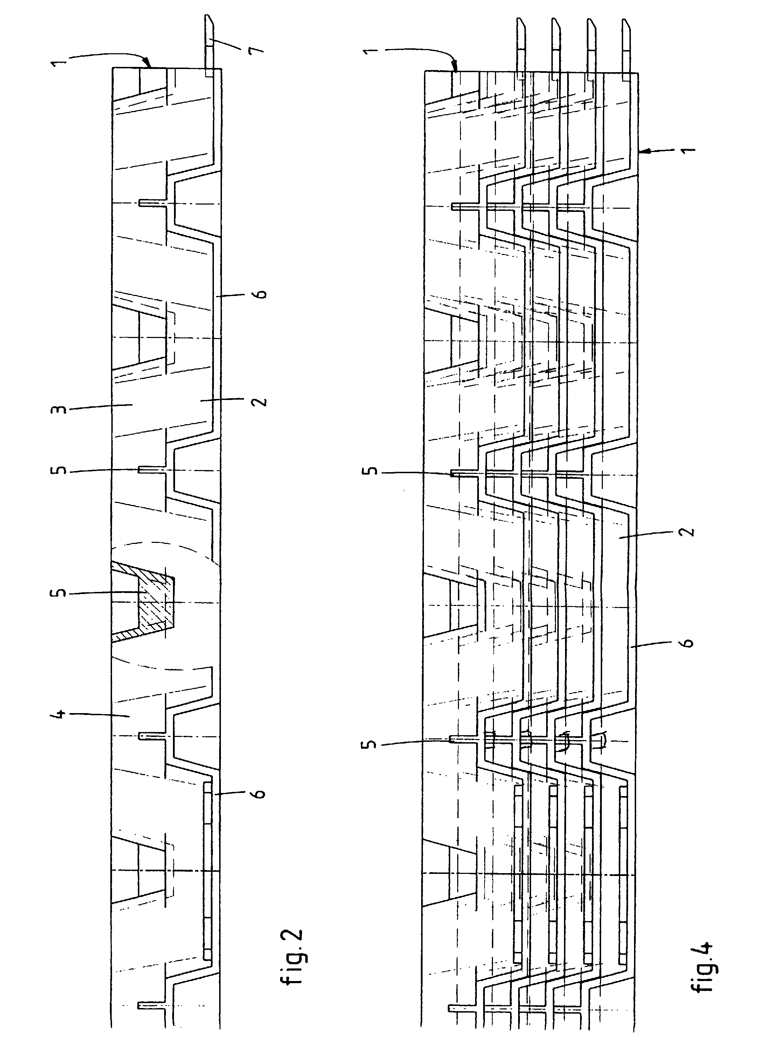

As is shown in Figure 2, the first and second cells 2, 3 are in fact staggered in vertical direction with respect to other, wherein first cells 2 are positioned lower than second cells 3. Accordingly, first cells 2 extend downwards beyond second cells 3 with their lower parts, whilst said lower parts are also arranged in spaced-apart relationship, as is shown in Figure 2. As a result, projections are formed within the height of the element 1, so that anchoring means are still formed without this requiring additional height, which anchoring means secure the construction element 1 is lateral direction with respect to the underlying surface.

First cells 2 each comprise a bottom 6 formed with a passage (not shown). As already said before, the lower part of first cell 2 is made up of a wall of its own, whilst the upper part of said first cells 2 is bounded by the walls 4 that form second cells 3 and also by partitioning walls 5. Said partitioning walls 5 may continue all the way to the upper surface or terminate under the upper surface of element 1.

The upper surface of the construction element, which is in fact formed by the upper edges of the upright walls 4 that form the second cells 3, are preferably profiled so as to form an antiskid surface.

As appears from Figure 4, the conical shape of cells 2 and 3 makes it possible to form elements 1 so that they can be nested, wherein the first and second cells 2, 3 overlap in vertical direction.

Elements 1 are provided at their edges with lips 7 which fit in cavities of adjoining elements, so that the elements are secured against movement relative to each other. Thus it is readily and easily possible to cover larger areas with the elements. The elements preferably have a standard paving stone size (for example 40 x 60 cm), so that a proper abutment between paving stones and elements 1 is possible.

The elements are preferably formed of a plastic material by means of an (injection) moulding process, with polypropylene now being preferred, but also all kinds of other plastics, such as HDPE, for example, can be used. The mould for forming the construction elements 1 may include conical cores for forming cells 2 and 3, which cores can be cleared easily and quickly, thus enabling a short production time.

Besides the aforesaid uses, the construction elements according to the invention can also be used for grass roofs or terraces, for example. For the latter application, a grid can be placed on the upper side of the construction elements 1, so that it will be easier and more comfortable to walk on. The elements act to prevent flooding and can function as reservoirs for rain water, so that the rain water will permeate into the ground more gradually and the soil will not be washed away. Depending on their specific use, the elements can be filled with gravel, earth and the like, whilst sods can be laid on the elements or grass can be sown thereon, wherein the roots can develop in the cells without impediment and grow through the construction elements 1. Also depending on their specific use, the construction elements can be placed directly on the underlying surface, whilst also an intermediate water-permeable foundation layer and/or sand layer may be provided.

The invention is not restricted to the above-described embodiment as shown in the drawing, which can be varied in several ways without departing from the scope of the invention. Thus several other combinations and arrangements of cells in the element are conceivable.

## Claims

1. A sheet-like construction element for paving surfaces and receiving a filler, such as gravel, earth, grass and the like, comprising a structure of interconnected cells spread over the main surface of the element, which cells are bounded in the plane of the element by upright walls and which are open clear through in a direction perpendicularly to the main surface of the element, **characterized in that** the walls of at least part of the cells extend at an angle to the surface of the element.

2. An element according to claim 1, wherein the angle with respect to a line perpendicularly to the main surface of the element is small, smaller than approximately 25 , preferably approximately 15 .

3. An element according to claim 1 or 2, wherein the element is made up of first and second cells, which alternately taper off from one flat side of the element and from the other flat side of the element.

4. An element according to claim 3, wherein the cells are arranged in alternating relationship in a direction obliquely to the main directions of element, preferably at an angle of 45 .

5. An element according to claim 3 or 4, wherein the side of the element that is intended to be the bottom side is open and the bottoms of the first cells tapering off from the upper side extend beyond the walls of the second cells in a direction perpendicularly to the main surface of the element.

6. An element according to any one of the claims 3 - 5, wherein the first and second cells are staggered in a direction perpendicularly to the main direction of the element with respect to other.

7. An element according to any one of the claims 3 - 6, wherein the second cells are arranged in spaced-apart relationship and wherein said second cells are interconnected by a, preferably perpendicular, partitioning wall.

8. An element according to claim 7, wherein the second cells are arranged in spaced-apart relationship, perpendicularly to the main surface of the element over the entire height.

9. An element according to any one of the preceding claims, wherein the cells are formed such that when the elements are stacked together, the cells positioned one above another will overlap in vertical direction.

10. A sheet-like construction element for paving surfaces and receiving a filler, such as gravel, earth, grass and the like, comprising a structure of interconnected cells spread over the main surface of the element, which cells are bounded in the plane of the element by upright walls and which are open clear through in a direction perpendicularly to the main surface of the element, wherein the side of the element that is intended to be the bottom side is open and the bottoms of the first cells tapering off from the upper side extend beyond the walls of adjacent second cells in a direction perpendicularly to the main surface of the element.

11. A sheet-like construction element for paving surfaces and receiving a filler, such as gravel, earth, grass and the like, comprising a structure of interconnected cells spread over the main surface of the element, which cells are bounded in the plane of the element by upright walls and which are open clear through in a direction perpendicularly to the main surface of the element, wherein the side of the element that is intended to be the bottom side is open.
